# DEMANDE DE BREVET EUROPEEN

(11) **EP 3 755 006 A1**
(43) Date de publication de la demande: **23.12.2020**
(21) Numéro de dépôt: 20180618.9
(22) Date de dépôt: 17.06.2020
(51) Int. Cl.: H04R 5/02, H04R 3/12

(54) **SYSTÈME AUDIO AUTONOME POUR APPUI-TÊTE DE SIÈGE, APPUI-TÊTE DE SIÈGE ET VÉHICULE ASSOCIÉS**

(30) Priorité: 19.06.2019 FR 1906590
(71) Demandeur: Faurecia Clarion Electronics Europe, 75012 Paris (FR)
(72) Inventeur: LOPEZ ZULETA, Nicolas, 75010 PARIS (FR); RIGAUD-MAAZAOUI, Mounira, 75010 PARIS (FR); NOIROT, Jérôme, 75010 PARIS (FR); DOUKOPOULOS, Xenofon, 75010 PARIS (FR); LAQUEILLE, Gaël, 75010 PARIS (FR); LECLERE, Jérémie, 75010 PARIS (FR)
(74) Mandataire: Lavoix

(57) **Abrégé**

L'invention concerne un système audio pour appui-tête comprenant un ensemble de R haut-parleur(s) droit(s), un ensemble de L haut-parleur(s) gauche(s), et une chaine électronique (10) configurée pour émettre un signal sonore à partir d'au moins un signal d'entrée droit (R_{IN}) et un signal d'entrée gauche (L_{IN}),
la chaine électronique comprenant :
- un module de séparation (16) configuré pour obtenir à partir du signal d'entrée droit (R_{IN}) et du signal d'entrée gauche (L_{IN}), au moins quatre composantes audio mono (CL, AL, CR, AR),
- un module de spatialisation sonore (18) configuré pour appliquer à chaque composante audio mono (CL, AL, CR, AR) délivrée par le module de séparation (16), un filtre binaural, préalablement sélectionné parmi une pluralité de filtres binauraux (B₁, B₂, ..., B_{N}), et dédié à ladite composante audio, produisant un son dont la position source est associée audit filtre binaural préalablement sélectionné.

## Description

La présente invention concerne un système audio pour appui-tête de siège comprenant un ensemble de R haut-parleur(s) droit(s), un ensemble de L haut-parleur(s) gauche(s), et une unité de contrôle comprenant une chaine électronique configurée pour émettre un signal sonore à partir d'au moins une paire de signaux d'entrée comprenant un signal d'entrée droit et un signal d'entrée gauche pour la reproduction de sons via une paire de canaux comprenant un canal droit et un canal gauche dont les extrémités respectives sont l'ensemble de R haut-parleur(s) droit(s) et l'ensemble de L haut-parleur(s) gauche(s), R et L étant des entiers supérieurs ou égal à un, chaque haut-parleur étant configuré pour être intégré dans l'appui-tête.

La présente invention concerne également un appui-tête de siège destiné à être couplé à un dossier d'un siège, l'appui-tête étant équipé d'un tel système audio.

L'invention concerne également un véhicule de transport de passagers, notamment un véhicule automobile, comprenant un ou plusieurs sièges, au moins un siège étant équipé d'un tel appui-tête.

L'invention concerne également un procédé de traitement audio, le procédé étant mis en oeuvre par un tel système audio pour appui-tête.

L'invention concerne également un programme d'ordinateur comportant des instructions logicielles qui, lorsqu'elles sont exécutées par un ordinateur, mettent en œuvre un tel procédé de traitement audio.

L'invention concerne le domaine des sièges de véhicule munis d'appui-têtes dit « intelligents » intégrant notamment des haut-parleurs, dits haut-parleurs en champ proche, pour la diffusion de sons à proximité de la tête de l'utilisateur assis sur le siège. De tels sièges peuvent être installés par exemple dans une voiture, un car, un avion, ou encore un train.

On connaît des documents EP 2 987 341 B1 et EP 3 094 114 B1 un système audio du type précité. Toutefois, de tels systèmes audio pour appui-tête ne divulguent pas de solution pour créer des zones audio privées pour différents occupants.

En effet, les documents EP 2 987 341 B1 et EP 3 094 114 B1 portent sur un procédé d'ajustement de signaux dans un système audio d'automobile comprenant notamment une étape de filtrage d'un signal multi-canal mixé avec la combinaison d'un premier et d'un deuxième filtre binaural, pour générer un signal de sortie binaural propre à être émis par les haut-parleurs en champ proche.

De plus, ces documents divulguent également que le procédé d'ajustement de signaux comprend une étape de détermination d'un premier ensemble de poids à appliquer aux signaux de canaux constituant le signal multi-canal mixé pour définir une première scène sonore et une étape de détermination d'un deuxième ensemble de poids à appliquer aux signaux de canaux constituant le signal multi-canal mixé pour définir une deuxième étage scène sonore.

Un des buts de la présente invention est de fournir une solution pour créer des zones audio privées pour différents occupants d'un même véhicule.

A cet effet, l'invention a pour objet un système audio pour appui-tête de siège comprenant un ensemble de R haut-parleur(s) droit(s), un ensemble de L haut-parleur(s) gauche(s), et une unité de contrôle comprenant une chaine électronique configurée pour émettre un signal sonore à partir d'au moins une paire de signaux d'entrée comprenant un signal d'entrée droit et un signal d'entrée gauche pour la reproduction de sons via une paire de canaux comprenant un canal droit et un canal gauche dont les extrémités respectives sont l'ensemble de R haut-parleur(s) droit(s) et l'ensemble de L haut-parleur(s) gauche(s), R et L étant des entiers supérieurs ou égal à un, chaque haut-parleur étant configuré pour être intégré dans l'appui-tête,
la chaine électronique comprenant :
- un module de séparation configuré pour obtenir à partir du signal d'entrée droit et du signal d'entrée gauche, au moins quatre composantes audio mono, de préférence, deux composantes audio mono gauches et deux composantes audio mono droites,
- un module de spatialisation sonore comprenant une pluralité de filtres binauraux, chaque filtre binaural étant configuré pour produire un son dont la position source est propre à être perçue comme distincte de la position réelle d'un desdits haut-parleurs gauche et/ou droit, le module de spatialisation 18 étant configuré pour appliquer à chaque composante audio mono délivrée par le module de séparation, un filtre binaural, préalablement sélectionné parmi ladite pluralité de filtres binauraux, et dédié à ladite composante audio, produisant un son correspondant à ladite composante audio, dont la position source est associée audit filtre binaural préalablement sélectionné.

Suivant d'autres aspects avantageux de l'invention, le système audio comprend une ou plusieurs des caractéristiques suivantes, prises isolément ou suivant toutes les combinaisons techniquement possibles :
- le module de séparation comprend :
   - un premier outil de détermination configuré pour déterminer un filtre de mono-extraction à partir des signaux d'entrée droit et gauche ;
   - un deuxième outil de détermination configuré pour déterminer un filtre de stéréo-extraction à partir des signaux d'entrée droit et gauche ; et
   - un outil de filtrage configuré pour déterminer lesdites au moins quatre composantes audio mono en appliquant le filtre de mono-extraction et le filtre de stéréo-extraction aux signaux d'entrée droit et gauche ;
- chaque filtre binaural est propre à délivrer, à partir de la composante audio mono à laquelle il est dédié, deux sorties comprenant une sortie gauche propre à être acheminée jusqu'à l'ensemble de L haut-parleur(s) gauche(s), et une sortie droite propre à être acheminée jusqu'à l'ensemble de R haut-parleur(s) droit(s) ;
- le module de spatialisation sonore comprend un outil de sélection, au sein de la pluralité de filtres binauraux, d'un filtre binaural à associer à chaque composante audio, l'outil de sélection étant connectable à au moins un des éléments appartenant au groupe comprenant :
   - un ensemble de générateur(s) d'alerte externe(s) au système audio,
   - un capteur de la position relative de l'ensemble des R haut-parleur(s) droit(s) et de la position de l'ensemble des L haut-parleur(s) gauche(s) par rapport à la position de la tête de l'utilisateur sur l'appui-tête,
   - un curseur de sélection manuelle de mode(s) de restitution sonore,
   l'outil de sélection étant propre à modifier dynamiquement la sélection du filtre binaural en fonction d'une information reçue dudit ensemble de générateur(s) d'alerte, dudit capteur ou dudit curseur ;
- l'ensemble de générateur(s) d'alerte comprend au moins un détecteur d'obstacle(s) mobile(s), l'outil de sélection étant propre à asservir dynamiquement la sélection d'un filtre binaural en fonction de la position de l'obstacle mobile ;
- la chaine électronique comprend en outre un module de reconstitution de basses fréquence dont les sorties sont connectées aux entrées du module de séparation ;
- la chaine électronique comprend en outre un module d'égalisation dont les sorties sont connectables en entrée du module de reconstitution de basses fréquence, le module d'égalisation étant configuré pour appliquer au préalable un traitement d'égalisation au signal d'entrée droit et au signal d'entrée gauche, le signal résultant égalisé droit et le signal résultant égalisé gauche étant propres à respectivement correspondre sensiblement à une courbe de référence prédéterminée d'écoute en champ proche droit et à une courbe de référence prédéterminée d'écoute en champ proche gauche ;
- la chaine électronique comprend en outre un module d'élargissement sonore dont l'entrée est connectable à la sortie du module de spatialisation sonore, le module d'élargissement sonore étant propre à appliquer un traitement de réverbération prédéterminé ;
- le traitement de réverbération prédéterminé varie en fonction de la position source du signal d'entrée du module d'élargissement ;
- la chaine électronique comprend en outre un module de réglage d'intensité sonore dont l'entrée est connectable à la sortie du module d'élargissement, le module de réglage d'intensité sonore étant configuré, pour un volume d'écoute donné, pour appliquer à son signal ou à ses signaux d'entrée une égalisation psychoacoustique propre à rendre perceptible avec la même intensité sonore toutes les fréquences de chaque signal d'entrée.

L'invention a également pour objet un appui-tête de siège destiné à être couplé à un dossier d'un siège, l'appui-tête étant équipé d'un système audio tel que défini ci-dessus, le(s) haut-parleur(s) étant intégrés dans l'appui-tête.

L'invention a également pour objet un véhicule de transport de passagers, notamment véhicule automobile, le véhicule de transport comprenant un ou plusieurs sièges, au moins un siège comportant un appui-tête tel que défini ci-dessus.

L'invention a également pour objet un procédé de traitement audio, mis en œuvre par un système audio pour appui-tête de siège comprenant un ensemble de R haut-parleur(s) droit(s), un ensemble de L haut-parleur(s) gauche(s), et une unité de contrôle comprenant une chaine électronique configurée pour émettre un signal sonore à partir d'au moins une paire de signaux d'entrée comprenant un signal d'entrée droit et un signal d'entrée gauche pour la reproduction de sons via une paire de canaux comprenant un canal droit et un canal gauche dont les extrémités respectives sont l'ensemble de R haut-parleur(s) droit(s) et l'ensemble de L haut-parleur(s) gauche(s), R et L étant des entiers supérieurs ou égal à un, chaque haut-parleur étant configuré pour être intégré dans l'appui-tête, le procédé comprenant :
- une séparation délivrant à partir du signal d'entrée quatre composantes audio mono, de préférence, deux composantes audio mono gauches et deux composantes audio mono droites,
- une spatialisation sonore appliquant à chaque composante audio un filtre binaural, préalablement sélectionné parmi une pluralité de filtres binauraux, chaque filtre binaural étant configuré pour produire un son dont la position source est propre à être perçue comme distincte de la position réelle d'un desdits haut-parleurs gauche et/ou droit, le filtre binaural sélectionné et appliqué étant dédié à ladite composante audio, et produisant un son correspondant à ladite composante audio, dont la position source est associée audit filtre binaural.

L'invention a également pour objet un programme d'ordinateur comportant des instructions logicielles qui, lorsqu'elles sont exécutées par un ordinateur, mettent en œuvre un tel procédé de traitement audio.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une vue schématique du système audio ;
[Fig 2] la figure 2 est une représentation schématique d'un mode de réalisation du module de spatialisation sonore selon l'invention ;
[Fig 3] la figure 3 est un organigramme d'un procédé de traitement audio selon la présente invention.

Dans la suite de la description, l'expression « sensiblement égal(e) à » désigne une relation d'égalité à plus ou moins 10%, de préférence à plus ou moins 5%.

Par la suite par « intégré dans l'appui-tête » on considère notamment le premier cas où l'ensemble de R haut-parleur(s) droit(s) et l'ensemble de L haut-parleur(s) gauche(s) sont placés à l'intérieur ou à l'extérieur d'une partie centrale de l'appui-tête sensiblement parallèle au dossier du siège, réglable en hauteur, et sur laquelle la tête d'un passager est propre à reposer, l'ensemble des R haut-parleur(s) droit(s) étant placés à droite de la position de la tête du passager, l'ensemble de L haut-parleur(s) gauche(s) étant placés à gauche de la position de la tête du passager.

Selon un deuxième cas, l'appui-tête comprend également deux prolongements latéraux (autrement appelés flancs latéraux ou joues latérales) localisés de part et d'autre de la partie centrale et s'étendant à partir de celle-ci, les prolongements latéraux étant fixes ou mobiles entre une position déployée alignée avec la partie centrale et une position rabattue dans laquelle un prolongement latéral est rapproché vers la tête du passager jusqu'à une position rabattue maximale où un prolongement latéral est perpendiculaire à la partie centrale. Selon ce deuxième cas, une intégration possible des haut-parleurs consiste à placer l'ensemble des R haut-parleur(s) droit(s) à l'intérieur ou à l'extérieur du prolongement latéral droit et l'ensemble de L haut-parleur(s) gauche(s) à l'intérieur ou à l'extérieur du prolongement latéral gauche.

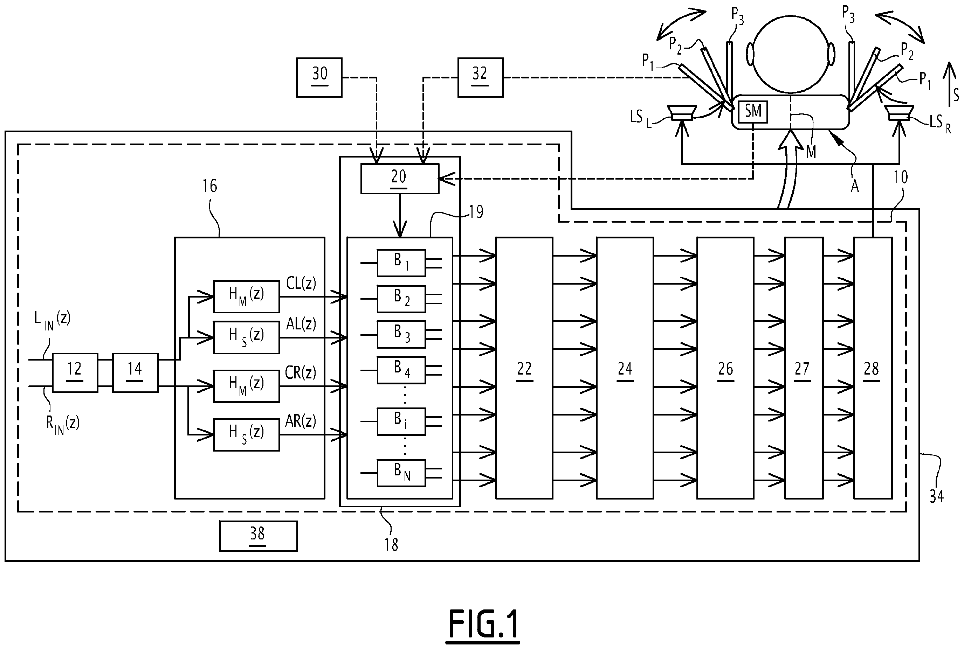

Sur la figure 1, un système audio selon la présente invention est configuré pour être intégré dans l'appui-tête A d'un siège de véhicule. Un tel appui-tête A comprend une partie centrale propre à être solidarisée au siège et deux prolongements latéraux, respectivement gauche et droite, solidarisés de part et d'autre de la partie centrale.

Selon la présente invention, l'appui-tête comprend au moins deux haut-parleurs répartis en un ensemble de R haut-parleur(s) droit(s) et un ensemble de L haut-parleur(s) gauche(s) répartis de part et d'autre d'une ligne médiane M de l'appui-tête parallèle au sens de déplacement S du véhicule.

Sur l'exemple de la figure 1, pour des raisons de simplicité, R=L=1, et le système audio selon la présente invention comprend alors un seul haut-parleur gauche LS_{L} et un seul haut-parleur droit LS_{R} et est destiné à émettre un signal sonore à partir d'au moins une paire de signaux d'entrée comprenant un signal d'entrée droit R_{IN}(z) et un signal d'entrée gauche L_{IN}(z) pour la reproduction de sons via une paire de canaux comprenant un canal droit et un canal gauche dont les extrémités respectives sont le haut-parleur droit LS_{R} et le haut-parleur gauche LS_{L}.

Pour ce faire, le système audio pour appui-tête de siège comprend une chaine électronique configurée 10, qui selon le mode de réalisation de la figure 1 comprend au moins neuf modules propres à mettre en œuvre des traitements électroniques distincts.

De manière optionnelle, une telle chaine électronique 10 comprend tout d'abord un module d'égalisation 12 dont les entrées sont propres à être alimentées par les signaux d'entrée droit R_{IN}(z) et gauche L_{IN}(z) et dont les sorties sont connectables en entrée d'un module optionnel de reconstitution de basses fréquence 14.

La chaine électronique 10 comprend en outre principalement un module de séparation 16 configuré pour obtenir, à partir du signal d'entrée droit R_{IN} et du signal d'entrée gauche L_{IN}, au moins quatre composantes audio mono CL, AL, CR, et AR. A titre d'exemple, le module de séparation 16 est configuré pour obtenir à partir du signal d'entrée droit R_{IN} deux composantes audio mono droites CR, AR et pour obtenir, à partir du signal d'entrée gauche L_{IN}, deux composantes audio mono gauches CL, AL. En variante, le module de séparation 16 est configuré pour obtenir à partir du signal d'entrée droit R_{IN} et du signal d'entrée gauche L_{IN}, cinq composantes audio mono, voire plus.

En sortie du module de séparation 16, la chaine électronique 10 comprend un module de spatialisation sonore 18 comprenant une pluralité 19 de filtres binauraux B₁, B₂, ... B_{N}, chaque filtre binaural étant configuré pour produire un son dont la position source est propre à être perçue comme distincte de la position réelle d'un desdits haut-parleurs gauche et/ou droit, le module de spatialisation 18 étant configuré pour appliquer à chaque composante audio CL, ou AL, ou CR, ou encore AR délivrée par le module de séparation 16, un filtre binaural, préalablement sélectionné parmi ladite pluralité de filtres binauraux, et dédié à ladite composante audio, produisant un son correspondant à ladite composante audio, dont la position source est associée audit filtre binaural préalablement sélectionné.

Pour ce faire un tel module de spatialisation sonore 18 comprend en outre selon l'exemple de la figure 1 un outil de sélection 20 au sein de la pluralité 19 de filtres binauraux (B₁, B₂, ..., B_{N}), du filtre binaural à associer à chaque composante audio mono.

Puis, de manière optionnelle, la chaine électronique 10 comprend un module d'élargissement sonore 22 dont l'entrée est connectable à la sortie du module de spatialisation sonore 18, le module d'élargissement 22 sonore étant propre à appliquer un traitement de réverbération prédéterminé.

En sortie du module d'élargissement 22, la chaine électronique 10 comprend en outre optionnellement un module 24 de réglage d'intensité sonore configuré, pour un volume d'écoute donné, pour appliquer à son signal ou à ses signaux d'entrée une égalisation psychoacoustique propre à rendre perceptible avec la même intensité sonore toutes les fréquences de chaque signal d'entrée.

Puis à la suite du module 24 de réglage d'intensité sonore, la chaine électronique 10 comprend un module 26 de génération du volume souhaité par l'utilisateur, connecté, le cas échéant via un limiteur 27 optionnel, à un module de mixage 28 des composantes audio ainsi traitées tout au long de la chaine électronique 10.

Une telle chaine électronique 10 est, selon un exemple de réalisation illustré par la figure 1, localisée dans une unité de contrôle 34 placée à l'intérieur de l'appui-tête A.

Chacun des modules constituant principalement ou optionnellement une telle chaine électronique 10 du système audio selon la présente invention est détaillé par la suite.

Tout d'abord, le module d'égalisation 12 optionnel est configuré pour appliquer au préalable un traitement d'égalisation au signal d'entrée droit R_{IN} et au signal d'entrée gauche L_{IN}, le signal résultant égalisé droit et le signal résultant égalisé gauche étant propres à respectivement correspondre sensiblement à une courbe de référence prédéterminée d'écoute en champ proche droit et à une courbe de référence prédéterminée d'écoute en champ proche gauche.

En particulier, une telle courbe de référence prédéterminée d'écoute en champ proche droit ou gauche, est par exemple propre, par comparaison à une écoute en champ lointain, à atténuer les hautes fréquences afin d'éviter en champ proche un rendu sonore « agressif » propre à rendre l'écoute de l'utilisateur fatigante et/ou désagréable. En pratique, la courbe de référence prédéterminée d'écoute en champ proche droit ou gauche est adaptable pour satisfaire les attentes d'écoute proposées par le constructeur, l'exploitant du véhicule ou encore l'utilisateur passager et s'adapter à des particularités propres à l'intégration des haut-parleurs dans un appui-tête. Il est donc possible que selon le cas une amplification des hautes fréquences soit appliquée à la place d'une atténuation selon l'exemple précédent.

Selon un aspect particulier, les courbes de référence prédéterminées d'écoute en champ proche droit et gauche sont identiques.

En effet, l'intégration d'un ou de plusieurs haut-parleur(s) dans un appui-tête a pour effet de modifier la réponse fréquentielle du ou des haut-parleur(s). De plus, la réponse fréquentielle d'un haut-parleur peut ne pas être plate et/ou est propre à être très limitée en basse fréquence du fait de ses dimensions réduites pour permettre son intégration au sein d'un appui-tête.

Le module d'égalisation 12 a pour but d'améliorer la réponse fréquentielle du ou des haut-parleur(s) intégrés au sein d'un appui-tête en la faisant correspondre au maximum à une courbe de réponse fréquentielle de référence adaptée une application d'écoute en champ proche. Autrement dit, le module d'égalisation est configuré pour modifier les signaux d'entrée droit R_{IN} et gauche L_{IN} de sorte à les faire respectivement converger vers une courbe de réponse fréquentielle de référence adaptée à la performance du ou des haut-parleurs auxquels ils sont associés en tenant compte de l'intégration de ce ou de ces haut-parleurs au sein de l'appui-tête. L'égalisation fournie par le module d'égalisation 12 est donc propre à s'adapter au mieux à la plage de fréquence de travail du ou des haut-parleurs intégrés dans l'appui-tête.

Le module optionnel de reconstitution de basses fréquence 14, dont les entrées sont connectées au module d'égalisation 12 et dont les sorties sont connectées aux entrées du module de séparation 16 est configuré pour ajouter un traitement supplémentaire à une partie basse fréquence des signaux issus du module d'égalisation.

Plus précisément, comme indiqué précédemment, le ou les haut-parleurs intégrés au sein d'un appui-tête sont généralement de petite taille, en comparaison des haut-parleurs fixes répartis au sein d'un habitacle de véhicule, et présente de par cette petite taille une réponse basse fréquence limitée avec des fréquences généralement supérieures à 150Hz.

L'égalisation mise en œuvre au préalable par le module d'égalisation 12 permet de compenser seulement jusqu'à un certain point une telle perte de qualité de restitution sonore en basse fréquence car le module d'égalisation applique un compromis entre l'augmentation du rendu des basses fréquences et l'augmentation des distorsions associées.

Le module optionnel de reconstitution de basses fréquence 14 vise à améliorer différemment le rendu des basses fréquences en stimulant la perception psychoacoustique de ces basses fréquences grâce au phénomène de la fondamentale manquante (de l'anglais *missing fundamental effect*). Plus précisément, grâce au module optionnel de reconstitution de basses fréquence 14, la fréquence qui ne peut pas être reproduite physiquement par le haut-parleur peut être perçue de manière psychoacoustique, le module optionnel de reconstitution de basses fréquence 14 étant propre à créer les harmoniques correspondantes dans la plage de fréquence de travail du ou des haut-parleur(s).

Pour ce faire, le module optionnel de reconstitution de basses fréquence 14 selon la présente invention utilise par exemple un procédé de reconstitution de basses fréquences tel que celui décrit dans le brevet EP 2 113 913 B1. Selon la présente invention, un tel procédé est ici spécifiquement appliqué au cas de l'intégration de haut-parleur(s) au sein d'un appui-tête pour en améliorer les performances de restitution basse fréquence afin de créer des zones audio privées pour différents occupants d'un même véhicule.

Ainsi grâce au traitement préalable mis en œuvre par le module optionnel de reconstitution de basses fréquence 14 selon la présente invention, la restitution des basses fréquences à l'utilisateur dont la tête repose sur l'appuie-tête ne requiert aucune contribution d'un autre haut-parleur en dehors du système audio de l'appui-tête.

En effet, le module de transformation du système audio selon la présente invention permet en sortie du système audio selon l'invention la restitution des basses fréquences qui seraient perdues en l'absence d'un tel module optionnel de reconstitution de basses fréquence 14.

Autrement dit, l'utilisateur parvient grâce au module de transformation selon la présente invention à percevoir virtuellement les basses fréquences qui sont en l'absence de ce module de transformation atténuées voire perdues à cause de la taille et de l'intégration des haut-parleurs dans l'appuie tête.

Ainsi, tout en garantissant une qualité de la restitution audio des basses fréquences, le système audio selon la présente invention est autonome et permet de s'affranchir de l'installation de haut-parleur(s) dans l'habitacle du véhicule ce qui permet notamment d'y libérer de l'espace voire d'alléger le véhicule.

La combinaison des modules optionnels d'égalisation 12 et de reconstitution de basses fréquence 14 permet donc d'améliorer considérablement la qualité en basse fréquence des signaux sonores qui seraient restitués par les haut-parleurs intégrés au sein d'un appui-tête, et ce préalablement aux traitements propres à être mis en œuvre par le module de séparation 16 et par le module de spatialisation sonore 18 qui lui succèdent dans la chaine électronique 10 et qui permettent à leur tour la création de zone(s) audio privée(s) en tant que telles.

Selon un aspect particulier, le module de séparation 16 comprend :
- un premier outil de détermination (non représenté) configuré pour déterminer un filtre de mono-extraction HM à partir des signaux d'entrée droit et gauche R_{IN}, L_{IN} ;
- un deuxième outil de détermination (non représenté) configuré pour déterminer un filtre de stéréo-extraction HS à partir des signaux d'entrée droit et gauche R_{IN}, L_{IN} ; et
- un outil de filtrage (non représenté) configuré pour déterminer lesdites au moins quatre composantes audio mono CL, AL, CR, AR en appliquant le filtre de mono-extraction HM et le filtre de stéréo-extraction HS aux signaux d'entrée droit R_{IN} et gauche L_{IN}.

Par « filtre de mono-extraction » HM, on entend, par exemple, un filtre propre à extraire, du signal d'entrée du module de séparation 16 correspondant au signal d'entrée droit R_{IN} (notamment après les prétraitements des modules optionnels d'égalisation 12 et de reconstitution de basses fréquence 14), la première composante audio mono droite CR commune aux deux signaux d'entrée droit et gauche R_{IN}, L_{IN}, et à extraire, du signal d'entrée du module de séparation 16 correspondant au signal d'entrée gauche L_{IN}, la première composante audio mono gauche CL commune aux deux signaux d'entrée droit R_{IN} et gauche L_{IN}.

Par « filtre de stéréo-extraction » HS on entend, par exemple, un filtre propre à extraire du signal d'entrée droit R_{IN} la deuxième composante audio mono droite AR faiblement corrélée, voire absente, du signal d'entrée gauche L_{IN} (i.e. la corrélation entre la composante mono droite AR et le signal d'entrée gauche L_{IN} étant inférieure à un seuil de corrélation prédéterminé voire nulle), et à extraire du signal d'entrée gauche L_{IN} la deuxième composante audio mono gauche AL, faiblement corrélée, voire absente du signal d'entrée droit R_{IN} (i.e. la corrélation entre la composante mono gauche AL et le signal d'entrée droit R_{IN} étant inférieure à un seuil de corrélation prédéterminé voire nulle).

Plus précisément, pour déterminer, le filtre de mono-extraction H_{M}, le premier outil de détermination est propre à mesurer la corrélation entre les deux signaux correspondants respectivement aux signaux d'entrée droit R_{IN} et gauche L_{IN}, et pour déterminer le filtre de stéréo-extraction H_{S}, le deuxième outil de détermination est propre à mesurer la cohérence, par exemple la cohérence quadratique (MSC de l'anglais *magnitude-squared coherence*) ou encore la cohérence à long terme (moyenne temporelle) entre les deux signaux correspondants respectivement aux signaux d'entrée droit R_{IN} et gauche L_{IN.}

En variante, toute autre méthode connue de détermination d'un filtre de mono-extraction ou de détermination d'un filtre stéréo-extraction de stéréo-extraction est applicable.

A titre d'alternative, comme indiqué précédemment, le module de séparation 16 est configuré pour obtenir à partir du signal d'entrée droit R_{IN} et du signal d'entrée gauche L_{IN}, cinq composantes audio mono, voire plus.

Les composantes audio mono sont ensuite délivrées par le module de séparation 16 en entrée du module de spatialisation sonore 18 précité.

Selon un aspect optionnel non représenté, chaque composante audio mono est au préalable amplifiée ou atténuée entre la sortie du module de séparation 16 et l'entrée du module de spatialisation sonore 18. Autrement dit, un gain est appliqué pour modifier l'amplitude relative des différentes composantes.

La création de zone(s) audio privée(s) prend en compte le fait que si les signaux d'entrée droit R_{IN} et gauche L_{IN} étaient restitués directement (i.e. sans utilisation des modules spécifiques de l'invention) par les haut-parleurs de l'appui-tête ils seraient perçu par un utilisateur passager comme provenant de la position réelle des haut-parleurs à savoir derrière sa tête reposant sur l'appui-tête et à proximité immédiate.

Le module de spatialisation 18 vise à modifier la perception sonore de l'utilisateur en produisant une perception sonore dont la position source est perçue comme distincte de la position réelle du ou des haut-parleur(s) de sorte à créer une zone d'émission audio privée toute autour de la tête de l'utilisateur passager et à élargir cette zone. Autrement dit, le module de spatialisation sonore 18 permet à un utilisateur passager de percevoir une pluralité prédéterminée de N positions de sources sonores virtuelles, par exemple réparties à 360° degrés tout autour de sa tête et placées à une distance supérieure par rapport à la position réelle du ou des haut-parleur(s) intégrés au sein de l'appui-tête.

Pour ce faire, le module de spatialisation 18 comprend une pluralité 19 de filtres binauraux comptant autant de filtres binauraux B₁, B₂, ..., B_{N} que de N positions sources sonores virtuelles réparties, par exemple à 360° degrés, tout autour de la position théorique de la tête d'un utilisateur passager sur l'appui-tête, à savoir par exemple au centre de l'appui-tête.

Selon un aspect particulier, chaque filtre binaural B₁, B₂, ..., B_{N} est propre à appliquer deux fonctions de transfert relatives à la tête HRTF (de l'anglais « *head-related transfer fonction* ») droite HRTF R et gauche HRTF L associées chacune respectivement à un angle θ₁, θ₂, ..., θ_{N} d'incidence virtuelle de l'onde sonore par rapport à un axe de référence prédéterminé.

Chaque fonction de transfert relative à la tête HRTF est au préalable obtenue en mesurant le trajet acoustique entre les deux oreilles d'un utilisateur passager dont la tête est idéalement placée sur la position théorique au centre de l'appui-tête et une source sonore réellement placée selon la direction d'incidence θᵢ avec 1≤i≤N.

Selon un aspect particulier un lissage des fonctions HRTF est mis en œuvre pour que la spatialisation mise en œuvre par le module de spatialisation 18 fonctionne en moyenne pour chaque utilisateur.

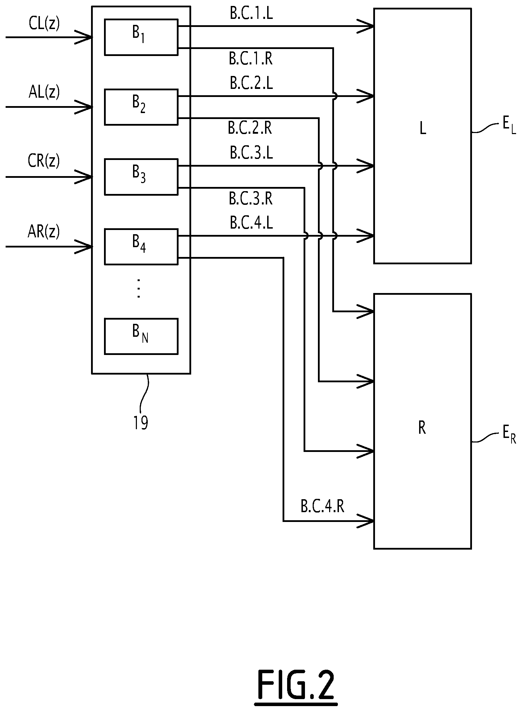

Autrement dit, tel qu'illustré par l'exemple de la figure 2, chaque filtre binaural est propre à délivrer, à partir de la composante audio mono à laquelle il est dédié, deux sorties comprenant une sortie gauche propre à être acheminée jusqu'à l'ensemble E_{L} de L haut-parleur(s) gauche(s), et une sortie droite propre à être acheminée jusqu'à l'ensemble E_{R} de R haut-parleur(s) droit(s).

Plus précisément, le filtre binaural B₁ est selon l'exemple de la figure 2 dédié à la composante audio mono CL et délivre deux sorties comprenant une sortie gauche B.C.1.L propre à être acheminée jusqu'à l'ensemble de L haut-parleur(s) gauche(s), et une sortie droite B.C.1.R propre à être acheminée jusqu'à l'ensemble de R haut-parleur(s) droit(s), telles que : B.C.1.L= CL^{∗} HRTF_L(θ₁) et B.C.1.R= CL^{∗}HRTF_R(θ₁).

De même, le filtre binaural B₂ est selon l'exemple de la figure 2 dédié à la composante audio mono AL et délivre deux sorties comprenant une sortie gauche B.C.2.L propre à être acheminée jusqu'à l'ensemble de L haut-parleur(s) gauche(s), et une sortie droite B.C.2.R propre à être acheminée jusqu'à l'ensemble de R haut-parleur(s) droit(s), telles que : B.C.2.L= AL^{∗} HRTF_L(θ₂) et B.C.2.R= AL^{∗} HRTF_R(θ₂).

De même, le filtre binaural B₃ est selon l'exemple de la figure 2 dédié à la composante audio mono CR et délivre deux sorties comprenant une sortie gauche B.C.3.L propre à être acheminée jusqu'à l'ensemble de L haut-parleur(s) gauche(s), et une sortie droite B.C.3.R propre à être acheminée jusqu'à l'ensemble de R haut-parleur(s) droit(s), telles que : B.C.3.L= CR^{∗}HRTF_L(θ₃) et B.C.3.R= CR^{∗}HRTF_R(θ₃).

De même, le filtre binaural B₄ est selon l'exemple de la figure 2 dédié à la composante audio mono AR et délivre deux sorties comprenant une sortie gauche B.C.4.L propre à être acheminée jusqu'à l'ensemble de L haut-parleur(s) gauche(s), et une sortie droite B.C.4.R propre à être acheminée jusqu'à l'ensemble de R haut-parleur(s) droit(s), telles que : B.C.4.L= AR^{∗} HRTF_L(θ₄) et B.C.4.R= AR^{∗}HRTF_R(θ₄).

Les signaux correspondant aux sorties droites B.C.1.R, B.C.2.R, B.C.3.R, B.C.4.R sont propres à être additionnés par le module de mixage 28 pour être ensuite restitués par l'ensemble de R haut-parleur(s) droit(s), et les signaux correspondant aux sorties gauches B.C.1.L, B.C.2.L, B.C.3.L, B.C.4.L sont propres à être additionnés par le module de mixage 28 pour être ensuite restitués par l'ensemble de L haut-parleur(s) gauche(s).

Selon un aspect particulier, les filtres binauraux B₁, B₂, B₃, B₄, préalablement sélectionnés respectivement de manière bijective pour chaque composante audio mono gauche et droite CL, AL, CR, AR sont par exemple, tous identiques, tous distincts ou encore comprennent deux voire trois filtres binauraux distincts/identiques.

En complément optionnel, tel qu'illustré sur la figure 1, le module de spatialisation sonore 18 comprend un outil de sélection 20, au sein de la pluralité 19 de filtres binauraux B₁, B₂, ..., B_{N}, du filtre binaural à associer à chaque composante audio, l'outil de sélection 20 étant connectable à au moins un des éléments appartenant au groupe comprenant :
- un ensemble 30 de générateur(s) d'alerte externe(s) au système audio,
- un capteur 32 de la position relative de l'ensemble des R haut-parleur(s) droit(s) et de la position de l'ensemble des L haut-parleur(s) gauche(s) par rapport à la position de la tête de l'utilisateur sur l'appui-tête,
- un curseur de sélection manuelle SM de mode(s) de restitution sonore,
l'outil de sélection 20 étant propre à modifier dynamiquement la sélection du filtre binaural à associer à une composante audio mono en fonction d'une information reçue de l'ensemble 30 de générateur(s) d'alerte, du capteur 32 ou dudit curseur SM.

Par « curseur », on entend tout moyen d'interface permettant à un utilisateur d'un appui-tête selon la présente invention de saisir le ou les mode(s) de restitution sonore souhaité(s), notamment en fonction du type de son à restituer.

Autrement dit, l'outil de sélection 20 permet de modifier de manière dynamique la perception sonore délivrée, et, le cas échéant, en fonction du contexte d'écoute du passager.

Par exemple, lorsque l'appui-tête comprend deux prolongements latéraux (mobiles selon plusieurs positions, entre une position déployée (non représentée) alignée avec la partie centrale et les positions rabattues P₁, P₂, illustrées par la figure 1, dans lesquelles un prolongement latéral est rapproché vers la tête du passager jusqu'à une position rabattue maximale P₃ où un prolongement latéral est perpendiculaire à la partie centrale, le capteur 32 de la position relative de l'ensemble des R haut-parleur(s) droit(s) et de la position de l'ensemble des L haut-parleur(s) gauche(s) par rapport à la position de la tête de l'utilisateur sur l'appui-tête est propre à transmettre une information représentative de cette position à l'outil de sélection 20 pour adapter la sélection de filtre binauraux afin que le mode de restitution sonore désiré par le passager soit obtenu quelle que soit la position des prolongements latéraux.

Pour ce faire, le module de spatialisation sonore 18 est par exemple associé à une base de données stockée au sein d'une mémoire 38, par exemple localisée dans l'unité de contrôle 34 du système radio selon la présente invention à laquelle l'outil de sélection 20 peut accéder en temps réel, la base de données comprenant une table de correspondance, obtenue au cours d'une phase de régalage préalable, associant à chaque mode de restitution sonore, une position des prolongements latéraux, une composante audio mono à traiter, et le filtre binaural dédié à ladite composante audio mono à traiter.

Selon un aspect particulier, l'ensemble de générateur(s) d'alerte 30 comprend au moins un détecteur d'obstacle(s) mobile(s), l'outil de sélection 20 étant propre à asservir dynamiquement la sélection d'un filtre binaural en fonction de la position de l'obstacle mobile, ce qui permet de créer une perception sonore dynamique en fonction de la position de l'obstacle mobile.

Autrement dit, selon cet aspect en cas de dépassement par un véhicule distinct de celui dans lequel est placé le passager, le détecteur d'obstacle(s) détermine par exemple à un temps t1 une première position V1, du véhicule distinct qui initie le dépassement, localisée à l'arrière du véhicule où le passager, dont la tête repose sur l'appui-tête comprenant le système audio selon la présente invention, est localisé, l'outil de sélection 20 est alors propre à sélectionner au temps t1, un ensemble de filtre(s) binauraux propre à restituer au passager un son dont la source est perçue derrière la tête du passager.

A un temps t2, le détecteur d'obstacle(s) détermine une deuxième position V2, du véhicule en dépassement localisée à gauche du véhicule où le passager est localisé, l'outil de sélection 20 est alors propre à sélectionner au temps t2, un ensemble de filtre(s) binauraux propre à restituer au passager un son dont la source est perçue à gauche de la tête du passager.

A un temps t3, le détecteur d'obstacle(s) détermine une troisième position V3, du véhicule en dépassement localisée devant le véhicule où le passager est localisé, l'outil de sélection 20 est alors propre à sélectionner au temps t3, un ensemble de filtre(s) binauraux propre à restituer un son dont la source est perçue devant la tête du passager.

De même, pour informer sur l'évolution de l'espace dans lequel évolue le véhicule, il est ainsi possible de produire une alerte sonore dont le déplacement de la source virtuelle suit la trajectoire d'un véhicule situé dans l'angle mort du conducteur dont la tête repose sur un appui-tête selon la présente invention.

Le curseur de sélection manuelle SM de mode(s) de restitution sonore permet également à l'utilisateur de contrôler la position des différentes sources sonores virtuelles (i.e. l'incidence du signal sonore perçu), le choix manuel d'un mode de restitution sonore étant directement pris en compte par l'outil de sélection 20 pour adapter la sélection d'un filtre binaural à appliquer à une composante audio mono donnée. Un tel curseur de sélection manuelle SM de mode(s) de restitution sonore offre une expérience personnalisée du système de audio (i.e. de sonorisation) selon la présente invention.

Selon un autre aspect particulier non représenté l'outil de sélection 20 est également propre, selon une première variante à modifier la spatialisation en fonction du type de source(s) audio (ou de source(s) sonore(s)), par exemple un premier type de source sonore est associé à une application multimédia pour écouter de la musique, une émission radio, le son d'une vidéo etc., un deuxième type de source sonore est associé à une application de téléphonie, un troisième type de source sonore est associé au véhicule en tant que tel notamment au moyen de l'ensemble 30 de générateur(s) d'alertes externe(s).

Par exemple, pour créer un environnement d'enveloppement d'écoute musicale, les directions d'arrivée des composantes audio mono dites centrales peuvent être de 30° et - 30° et celles des composantes audio mono dites d'ambiance peuvent être de 100° et -100°.

En complément ou à titre d'alternative, les signaux audio générées par un module de d'aide à la conduite du véhicule (non représenté) (ADAS de l'anglais *Advanced Driver Assistance System*) et des signaux audio de guidage sont également propres à être spatialisés avec des directions d'arrivée (i.e. d'incidence à partir de position source virtuelles) prédéterminées. Ces directions d'arrivée peuvent être différentes pour chaque type de signal. Par exemple, les signaux ADAS peuvent venir de 30° alors que les signaux de guidage peuvent venir de -50° et les sonneries de téléphonie -60°.

Selon une deuxième variante non représentée, la chaine électronique 10 est dupliquée, pour chaque type de son à restituer, par exemple au sein d'une même unité de contrôle 34. Autrement dit, selon cette deuxième variante plusieurs chaines électroniques 10, chacune dédiée à un type de son particulier, sont parallélisées en entrée de l'ensemble des R haut-parleur(s) droit(s) et de l'ensemble des L haut-parleur(s) gauche(s), ce qui permet, par exemple, le cas échéant de superposer, sur la musique en cours de restitution, une alerte émise par le véhicule, telle qu'une information de trafic générée par un GPS ou par un personnel naviguant du véhicule ou encore un rappel d'ordre du jour personnel saisi dans un agenda de terminal mobile téléphonique, et cela avec des positions sources virtuellement distinctes.

Selon l'exemple de la figure 1, les sorties du module de spatialisation sonore 18 sont optionnellement connectées à un module d'élargissement 22 sonore propre à appliquer un traitement de réverbération prédéterminé.

En effet, directement après spatialisation le son sortant propre à être délivré par les haut-parleurs de l'appui-tête serait perçu comme émis par des sources virtuelles, certes localisées en des positions distinctes de la position réelle des haut-parleurs, mais toujours virtuellement positionnées à l'intérieur de la tête de l'utilisateur passager. Afin d'augmenter la distance perçue entre ces sources virtuelles et la tête du passager un traitement de réverbération est, selon la présente invention, propre à être mis en œuvre dans la chaine électronique 10 d'un système audio pour appui-tête selon le mode de réalisation illustré par la figure 1. En particulier, la réverbération mise en œuvre, tout en restant imperceptible par une oreille humaine, permet « d'externaliser » la position des sources virtuelles de sorte que le son perçu n'est plus associé à une restitution sonore provenant de l'intérieur de la tête.

Selon un aspect particulier de la présente invention, le traitement de réverbération prédéterminé varie en fonction de la position source du signal d'entrée du module d'élargissement. A titre d'alternative, tout autre traitement de réverbération utilisé dans d'autres applications audio sont également propres à être mise en œuvre au sein de la chaine électronique 10 du système audio pour appui-tête autonome selon la présente invention, et plus particulièrement en sortie du module de spatialisation 18.

Comme indiqué précédemment, selon le mode de réalisation illustré par la figure 1, en sortie du module d'élargissement 22, la chaine électronique 10 comprend en outre optionnellement un module 24 de réglage d'intensité sonore configuré, pour un volume d'écoute (i.e. volume sonore) donné, pour appliquer à son signal ou à ses signaux d'entrée une égalisation psychoacoustique propre à rendre perceptible avec la même intensité sonore toutes les fréquences de chaque signal d'entrée.

Plus précisément, on entend par intensité sonore la perception subjective de la pression sonore. En effet, la perception du niveau sonore par l'oreille humaine dépend du contenu en fréquence des signaux reçus et de leur puissance acoustique. Par exemple, pour un faible volume d'écoute, l'audition humaine devient moins sensible aux basses et hautes fréquences. Pour compenser une telle perte de sensibilité à certaines fréquences en présence d'une valeur prédéterminée de volume sonore, le module 24 de réglage d'intensité sonore ajouté dans la chaine électronique 10 du système audio d'appui-tête applique un gain différent d'une fréquence à une autre de sorte à rendre perceptible avec la même intensité sonore toutes les fréquences.

Sur l'exemple de réalisation de la figure 1, à la suite du module 24 de réglage d'intensité sonore, la chaine électronique 10 comprend un module 26 de génération du volume souhaité par l'utilisateur appliquant un gain dans le domaine temporel, autrement dit appliquant un même gain à toutes les fréquences sonores.

Dans la chaine électronique 10 la position des modules optionnels 24 de réglage d'intensité sonore et 26 de génération du volume souhaité par l'utilisateur sont interchangeables.

Le module 24 de réglage d'intensité, comme le module 26 de génération du volume souhaité par l'utilisateur, sont, selon un aspect particulier, tous deux asservis de manière synchrone, au réglage de volume sonore désiré effectué manuellement par l'utilisateur notamment via son ordiphone ou smartphone communiquant de manière filaire ou sans fil avec l'appui-tête selon la présente invention ou via un bouton dédié au réglage du volume sonore directement placé sur l'appui-tête. Autrement dit, chaque changement de niveau de volume requis par l'utilisateur déclenche à la fois une mise à jour des paramètres du module 24 de réglage d'intensité, comme du module 26 de génération du volume souhaité par l'utilisateur.

A la suite du module 24 de réglage d'intensité et du module 26 de génération du volume souhaité par l'utilisateur, la chaine électronique 10 comprend un limiteur 27 propre à éviter les distorsions d'écrêtage lui-même connecté à un module de mixage 28 des composantes audio ainsi traitées tout au long de la chaine 10.

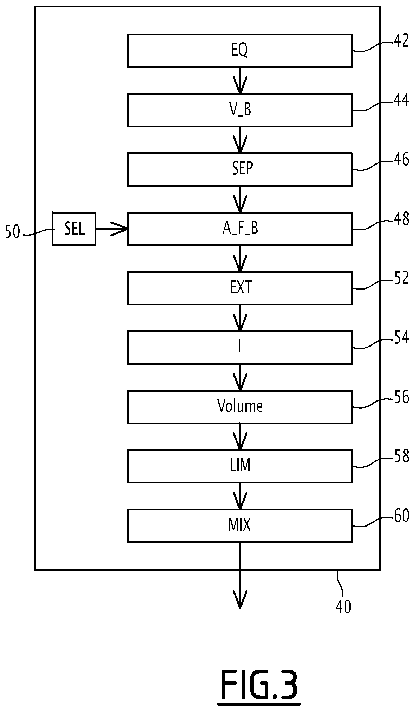

Un exemple non limitatif de fonctionnement du système audio illustré par la figure 1 va désormais être expliqué à l'aide de la figure 3 représentant un exemple d'organigramme d'un procédé 40 de traitement audio selon l'invention.

Lors d'une première étape optionnelle 42, le système audio met en œuvre, via le module d'égalisation 12, une égalisation EQ des signaux d'entrée droit R_{IN} et gauche L_{IN}.

Puis, selon une deuxième étape optionnelle 44, le système audio créer virtuellement V_B dans la plage de fréquence de travail du ou des haut-parleur(s), via le module de reconstitution de basses fréquence 14, les harmoniques correspondant à la fréquence qui ne peut pas être reproduite physiquement par le haut-parleur afin qu'elles soient perçues de manière psychoacoustique.

Ensuite selon une étape 46, le système audio met en œuvre via le module de séparation, une séparation SEP délivrant à partir du signal d'entrée droit R_{IN} et du signal d'entrée gauche L_{IN} au moins quatre composantes audio, par exemple les composantes audio mono gauches et droites précitées CL, AL, CR, AR.

Puis, selon une étape 48, le système audio met en œuvre, via le module de spatialisation 18, une spatialisation sonore en appliquant à chaque composante audio mono, par exemple CL, AL, CR, AR, un filtre binaural, préalablement sélectionné au cours d'une étape 50 de sélection SEL parmi une pluralité de filtres binauraux (B₁, B₂, ... B_{N}), chaque filtre binaural étant configuré pour produire un son dont la position source est propre à être perçue comme distincte de la position réelle d'un desdits haut-parleurs gauche et/ou droit, le filtre binaural sélectionné et appliqué étant dédié à ladite composante audio, et produisant un son correspondant à ladite composante audio, dont la position source est associée audit filtre binaural.

Ensuite, selon une étape optionnelle 52, le système audio met en œuvre, via le module d'élargissement sonore 22, une externalisation EXT de la position des sources virtuelles de sorte que le son perçu n'est plus associé à une restitution sonore provenant de l'intérieur de la tête.

Puis, selon une étape optionnelle 54, le système audio met en œuvre, pour un volume d'écoute donné, via le module de réglage d'intensité sonore 24, une application I d'une égalisation psychoacoustique propre à rendre perceptible avec la même intensité sonore toutes les fréquences du signal ou des signaux d'entrée du module de réglage d'intensité sonore 24.

Ensuite, lors d'une étape optionnelle 56, interchangeable avec l'étape optionnelle précédente 54, le système audio met en œuvre, via le module 26 de génération du volume souhaité par l'utilisateur, l'application d'un gain dans le domaine temporel.

L'étape optionnelle 56 est suivie d'une autre étape optionnelle 58 où le système audio met en œuvre, via le limiteur 27, une limitation LIM pour éviter les distorsions d'écrêtage.

Enfin dans l'étape 60, les sorties du limiteur 27 optionnel propres à être acheminées jusqu'à l'ensemble de R haut-parleur(s) droit(s) sont mixées par addition d'une part, et les sorties du limiteur 27 optionnel propres à être acheminées jusqu'à l'ensemble de L haut-parleur(s) gauches(s) sont mixées par addition d'autre part.

Ainsi, avec le système audio pour appui-tête selon l'invention, il est possible créer des zones audio privées pour différents occupants tout en évitant le port de casque audio ou d'écouteurs personnels propres à provoquer une sensation d'inconfort aux oreilles et/ou à la tête.

De plus, en complément facultatif, l'outil de sélection 20 du module de spatialisation 18 permet de fournir à chaque occupant des informations instantanées (telle que des informations de trafic, des rappel d'ordre du jour personnel, etc.) avec des effets de perception spécifiques, et cela, le cas échéant en poursuivant la restitution d'un signal sonore multimédia tel que de la musique.

De plus, en complément facultatif l'ordonnancement particulier des modules constitutifs de la chaine électronique 10 aboutit à une optimisation de la restitution sonore et rend complètement autonome le système audio d'appui tête, ce qui permet de s'affranchir de l'installation de haut-parleur(s) dans l'habitacle du véhicule et en conséquence d'y libérer de l'espace voire d'alléger le véhicule.

On conçoit ainsi que le système audio selon l'invention permet d'améliorer l'interaction avec l'utilisateur et de lui offrir alors une meilleure expérience audio.

## Revendications

1. Système audio pour appui-tête de siège comprenant un ensemble de R haut-parleur(s) droit(s), un ensemble de L haut-parleur(s) gauche(s), et une unité de contrôle (34) comprenant une chaine électronique (10) configurée pour émettre un signal sonore à partir d'au moins une paire de signaux d'entrée comprenant un signal d'entrée droit (R_{IN}) et un signal d'entrée gauche (L_{IN}) pour la reproduction de sons via une paire de canaux comprenant un canal droit et un canal gauche dont les extrémités respectives sont l'ensemble de R haut-parleur(s) droit(s) et l'ensemble de L haut-parleur(s) gauche(s), R et L étant des entiers supérieurs ou égal à un, chaque haut-parleur étant configuré pour être intégré dans l'appui-tête,
**caractérisé en ce que** la chaine électronique (10) comprend :
- un module de séparation (16) configuré pour obtenir à partir du signal d'entrée droit (R_{IN}) et du signal d'entrée gauche (L_{IN}), au moins quatre composantes audio mono (CL, AL, CR, AR),
- un module de spatialisation sonore (18) comprenant une pluralité (19) de filtres binauraux (B₁, B₂, ..., B_{N}), chaque filtre binaural étant configuré pour produire un son dont la position source est propre à être perçue comme distincte de la position réelle d'un desdits haut-parleurs gauche et/ou droit, le module de spatialisation 18 étant configuré pour appliquer à chaque composante audio mono droites et gauches (CL, AL, CR, AR) délivrée par le module de séparation (16), un filtre binaural, préalablement sélectionné parmi ladite pluralité de filtres binauraux, et dédié à ladite composante audio, produisant un son correspondant à ladite composante audio, dont la position source est associée audit filtre binaural préalablement sélectionné.

2. Système audio selon la revendication 1, dans lequel le module de séparation (16) comprend :
- un premier outil de détermination configuré pour déterminer un filtre de mono-extraction (HM) à partir des signaux d'entrée droit et gauche (R_{IN}, L_{IN}) ;
- un deuxième outil de détermination configuré pour déterminer un filtre de stéréo-extraction (HS) à partir des signaux d'entrée droit et gauche (R_{IN}, L_{IN}) ; et
- un outil de filtrage configuré pour déterminer lesdites au moins quatre composantes audio mono (CL, AL, CR, AR) en appliquant le filtre de mono-extraction (HM) et le filtre de stéréo-extraction (HS) aux signaux d'entrée droit et gauche (R_{IN}, L_{IN}).

3. Système audio selon la revendication 1 ou 2, dans lequel chaque filtre binaural est propre à délivrer, à partir de la composante audio mono (CL, AL, CR, AR) à laquelle il est dédié, deux sorties comprenant une sortie gauche (B.C.1.L, B.C.2.L, B.C.3.L, B.C.4.L) propre à être acheminée jusqu'à l'ensemble de L haut-parleur(s) gauche(s), et une sortie droite (B.C.1.R, B.C.2.R, B.C.3.R, B.C.4.R) propre à être acheminée jusqu'à l'ensemble de R haut-parleur(s) droit(s).

4. Système audio selon l'une quelconque des revendications précédentes, dans lequel le module de spatialisation sonore (18) comprend un outil de sélection (20), au sein de la pluralité (19) de filtres binauraux (B₁, B₂, ..., B_{N}), d'un filtre binaural à associer à chaque composante audio, l'outil de sélection (20) étant connectable à au moins un des éléments appartenant au groupe comprenant :
- un ensemble (30) de générateur(s) d'alerte externe(s) au système audio,
- un capteur (32) de la position relative de l'ensemble des R haut-parleur(s) droit(s) et de la position de l'ensemble des L haut-parleur(s) gauche(s) par rapport à la position de la tête de l'utilisateur sur l'appui-tête,
- un curseur de sélection manuelle (SM) de mode(s) de restitution sonore,
l'outil de sélection (20) étant propre à modifier dynamiquement la sélection du filtre binaural en fonction d'une information reçue dudit ensemble de générateur(s) d'alerte, dudit capteur ou dudit curseur (SM).

5. Système audio selon la revendication 4, dans lequel l'ensemble de générateur(s) d'alerte (30) comprend au moins un détecteur d'obstacle(s) mobile(s), l'outil de sélection étant propre à asservir dynamiquement la sélection d'un filtre binaural en fonction de la position de l'obstacle mobile.

6. Système audio selon l'une quelconque des revendications précédentes dans lequel la chaine électronique (10) comprend en outre un module de reconstitution de basses fréquence (14) dont les sorties sont connectées aux entrées du module de séparation (16).

7. Système audio selon la revendication 6 dans lequel la chaine électronique (10) comprend en outre un module d'égalisation (12) dont les sorties sont connectables en entrée du module de reconstitution de basses fréquence (14), le module d'égalisation (12) étant configuré pour appliquer au préalable un traitement d'égalisation au signal d'entrée droit (R_{IN}) et au signal d'entrée gauche (L_{IN}), le signal résultant égalisé droit et le signal résultant égalisé gauche étant propres à respectivement correspondre sensiblement à une courbe de référence prédéterminée d'écoute en champ proche droit et à une courbe de référence prédéterminée d'écoute en champ proche gauche.

8. Système audio selon l'une quelconque des revendications précédentes, dans lequel la chaine électronique (10) comprend en outre un module d'élargissement sonore (22) dont l'entrée est connectable à la sortie du module de spatialisation sonore (18), le module d'élargissement sonore étant propre à appliquer un traitement de réverbération prédéterminé.

9. Système audio selon la revendication 8, dans lequel le traitement de réverbération prédéterminé varie en fonction de la position source du signal d'entrée du module d'élargissement.

10. Système audio selon la revendication 8 ou 9 dans lequel la chaine électronique (10) comprend en outre un module de réglage d'intensité sonore (24) dont l'entrée est connectable à la sortie du module d'élargissement, le module de réglage d'intensité sonore étant configuré, pour un volume d'écoute donné, pour appliquer à son signal ou à ses signaux d'entrée une égalisation psychoacoustique propre à rendre perceptible avec la même intensité sonore toutes les fréquences de chaque signal d'entrée.

11. Appui-tête (A) de siège destiné à être couplé à un dossier d'un siège, **caractérisé en ce que** l'appui-tête est équipé d'un système audio selon l'une quelconque des revendications précédentes, le(s) haut-parleur(s) étant intégrés dans l'appui-tête.

12. Véhicule de transport de passagers, notamment véhicule automobile, le véhicule de transport comprenant un ou plusieurs sièges, **caractérisé en ce qu'**au moins un siège comporte un appui-tête selon la revendication précédente.

13. Procédé de traitement audio mis en œuvre par un système audio pour appui-tête (A) de siège comprenant un ensemble de R haut-parleur(s) droit(s), un ensemble de L haut-parleur(s) gauche(s), et une unité de contrôle (34) comprenant une chaine électronique (10) configurée pour émettre un signal sonore à partir d'au moins une paire de signaux d'entrée comprenant un signal d'entrée droit (R_{IN}) et un signal d'entrée gauche (L_{IN}) pour la reproduction de sons via une paire de canaux comprenant un canal droit et un canal gauche dont les extrémités respectives sont l'ensemble de R haut-parleur(s) droit(s) et l'ensemble de L haut-parleur(s) gauche(s), R et L étant des entiers supérieurs ou égal à un, chaque haut-parleur étant configuré pour être intégré dans l'appui-tête,
le procédé comprenant :
- une séparation délivrant à partir du signal d'entrée droit (R_{IN}) et du signal d'entrée gauche (L_{IN}) au moins quatre composantes audio mono (CL, AL, CR, AR),
- une spatialisation sonore appliquant à chaque composante audio (CL, AL, CR, AR) un filtre binaural, préalablement sélectionné parmi une pluralité de filtres binauraux (B₁, B₂, ... B_{N}), chaque filtre binaural étant configuré pour produire un son dont la position source est propre à être perçue comme distincte de la position réelle d'un desdits haut-parleurs gauche et/ou droit, le filtre binaural sélectionné et appliqué étant dédié à ladite composante audio, et produisant un son correspondant à ladite composante audio, dont la position source est associée audit filtre binaural.

14. Produit programme d'ordinateur comportant des instructions logicielles qui, lorsqu'elles sont exécutées par un ordinateur, mettent en œuvre un procédé de traitement audio selon la revendication 13.
